# EUROPEAN PATENT APPLICATION

(11) **EP 4 417 717 A1**
(43) Date of publication of application: **21.08.2024**
(21) Application number: 22906956.2
(22) Date of filing: 22.09.2022
(51) Int. Cl.: C21D 8/12, C22C 38/00, C22C 38/60, H01F 1/147

(54) **GRAIN-ORIENTED ELECTROMAGNETIC STEEL SHEET AND METHOD FOR PRODUCING SAME**

(30) Priority: 14.12.2021 JP 2021202287
(71) Applicant: JFE Steel Corporation, Tokyo 100-0011 (JP)
(72) Inventor: OMURA Takeshi, Tokyo 100-0011 (JP); ICHIHARA Yoshihisa, Tokyo 100-0011 (JP); YOSHIZAKI Souichiro, Tokyo 100-0011 (JP)
(74) Representative: Hoffmann Eitle
(86) International application number: PCT/JP2022/035418
(87) International publication number: WO 2023/112421

(57) **Abstract**

A grain-oriented electrical steel sheet having excellent coating adhesion properties is provided, and methods for manufacturing the same are provided.

A grain-oriented electrical steel sheet of the present invention includes a forsterite coating and an insulating coating that are disposed in this order starting from a surface side of the steel sheet, wherein a frequency of formation of cracks propagating through the insulating coating in a region extending 100 um toward a widthwise middle of the grain-oriented electrical steel sheet from a widthwise edge of the grain-oriented electrical steel sheet is less than or equal to 3.0 times the frequency of formation of cracks propagating through the insulating coating in a region extending toward the widthwise middle from a widthwise position more than 100 um from the widthwise edge to a widthwise position 500 um from the widthwise edge, where the frequency is expressed as a number per mm.

## Description

### Technical Field

The present invention relates to a grain-oriented electrical steel sheet and methods for manufacturing the same and, in particular, relates to a grain-oriented electrical steel sheet having excellent coating adhesion properties and to methods for manufacturing the same.

### Background Art

In general, grain-oriented electrical steel sheets are provided with a coating disposed on a surface thereof so that the steel sheets can have insulating properties, workability, corrosion protection properties, and the like. The coating is made up of a forsterite coating and a phosphate-salt-containing tension insulating coating formed thereon. The forsterite coating is primarily made of forsterite that is formed during final annealing.

The coating is formed at a high temperature and has a low coefficient of thermal expansion. Accordingly, when the steel sheet has cooled to room temperature, a difference in the coefficient of thermal expansion between the steel sheet and the coating produces an effect of imparting tension to the steel sheet, thereby reducing iron loss. Furthermore, the coating is required to have all of many desired properties, such as corrosion resistance, insulating properties, and electric strength.

In the related art, in an effort to provide these properties, various insulating coatings have been proposed. For example, Patent Literature 1 proposes an insulating coating primarily made of magnesium phosphate, colloidal silica, and chromic anhydride, and Patent Literature 2 proposes an insulating coating primarily made of aluminum phosphate, colloidal silica, and chromic anhydride.

Note that when a grain-oriented electrical steel sheet is to be used in a core of a transformer, such as a wound core or an EI-core, the steel sheet is subjected to stress relief annealing at approximately 800°C for relieving strain introduced during processing performed to provide a predetermined shape. Regarding the atmosphere for the stress relief annealing, a highly reactive atmosphere, such as air or DX gas, is often employed for the annealing by some users. However, annealing in such an atmosphere can cause damage to the coating, which may result in degradation of coating adhesion properties. In particular, in a grain-oriented electrical steel sheet that has been slit, the coating tends to delaminate at or near a widthwise edge (processed edge). Furthermore, even in a grain-oriented electrical steel sheet that has not undergone stress relief annealing, delamination of the coating tends to occur at or near the processed edge resulting from slitting.

Slitting is a process that is performed to improve passing properties of the steel sheet associated with a manufacturing process or to respond to widths ordered by users, and, therefore, slitting is a process that is very difficult to avoid. In an instance where coating adhesion properties have been reduced as a result of slitting, problems may occur. For example, during a process of manufacturing a core from a grain-oriented electrical steel sheet at a user's site, the coating may delaminate and form dust particles, which may significantly reduce manufacturing efficiency. Furthermore, in instances where the steel sheet is used as a core of a transformer, when the coating adhesion properties have been reduced, conduction may occur between the laminated layers and, consequently, can lead to degradation of core properties and, in some cases, erosion of the core, which is a serious problem. Accordingly, improving the coating adhesion properties of the widthwise edge (processed edge) of a slit grain-oriented electrical steel sheet is a very important challenge.

Examples of measures that have been taken to prevent the degradation of coating adhesion properties are as follows. Patent Literature 3 discloses a technique that involves applying a coating liquid including a metal-binding-group-containing organometallic compound onto a steel sheet and then performing baking in an atmosphere having a specified oxygen partial pressure. Patent Literature 4 discloses a technique that involves applying a coating composition containing aluminum phosphate, zinc phosphate, cobalt hydroxide, strontium hydroxide, an organic resin emulsion, aluminum silicate, and a titanium chelate onto a steel sheet.

The technique disclosed in Patent Literature 3 is mainly a technique in which a coating is formed directly on a steel sheet, with no forsterite coating formed thereon, and is, therefore, different from the technique primarily used in the related art in which an insulating coating is formed on a surface of a steel sheet that has a forsterite coating. In addition, the use of a silane coupling agent, which is expensive, makes industrial mass production difficult. Furthermore, the technique of Patent Literature 4 is mainly a technique in which an insulating coating is formed on a surface of a non-oriented electrical steel sheet and is, therefore, different from the technique in which an insulating coating is formed on a surface of a grain-oriented electrical steel sheet having a forsterite coating. In addition, the use of a large amount of an organic resin emulsion presents a problem in that, during stress relief annealing, carbon enters the steel sheet and degrades magnetic properties.

Techniques for preventing the occurrence of the problems have been disclosed. Patent Literature 5 discloses a technique that involves including a specified amount of chromium in a forsterite coating and, in addition, specifying a ratio between elemental phosphorus and an elemental metal present in the coating, thereby improving coating adhesion properties. Using this technique can be expected to improve coating adhesion properties to some extent. However, there is still a need for further improvement in coating adhesion properties.

### Citation List

### Patent Literature

PTL 1: Japanese Examined Patent Application Publication No. 56-52117
PTL 2: Japanese Examined Patent Application Publication No. 53-28375
PTL 3: Japanese Patent No. 4635347
PTL 4: Japanese Patent No. 4731625
PTL 5: Japanese Unexamined Patent Application Publication No. 2017-101292

### Summary of Invention

### Technical Problem

The present invention has been made in view of the above-described circumstances, and objects of the present invention are to provide a grain-oriented electrical steel sheet having excellent coating adhesion properties and to provide methods for manufacturing the same.

### Solution to Problem

The present inventors noticed that many existing techniques are techniques intended to improve pre-slitting coating adhesion properties, thereby improving post-slitting coating adhesion properties. The present inventors focused their attention on the slitting, as opposed to the focus of the existing techniques, and, accordingly, conducted studies to develop measures for achieving improvement from the standpoint of minimizing damage to the coating caused by slitting, thereby improving the post-slitting coating adhesion properties.

Consequently, it was found that in instances where slitting with a laser under specific conditions is employed, rather than slitting with a blade as employed in the related art, the degradation of coating adhesion properties associated with slitting can be inhibited. It was also found that a grain-oriented electrical steel sheet (hereinafter also referred to simply as an "electrical steel sheet") in which the degradation of coating adhesion properties associated with slitting is inhibited is one in which formation of cracks propagating through the insulating coating at or near the slit portion is limited. In addition, it was found that in the electrical steel sheet in which the degradation of coating adhesion properties associated with slitting is inhibited, a roughness factor of a surface of the electrical steel sheet is high. The roughness factor of the surface of the electrical steel sheet was derived as follows. A sample was cut from the electrical steel sheet, and a specific surface area of the sample was measured with a gas adsorption method that used a Kr gas. A true surface area of the surface including microscopic irregularities was calculated from the result, and the true surface area was divided by an apparent surface area determined by assuming that the surface is completely smooth. Note that since the grain-oriented electrical steel sheet of the present invention has an insulating coating on a surface, the roughness factor of the surface of the electrical steel sheet is the roughness factor of the surface of the insulating coating.

The present invention was made based on the findings described above. Specifically, primary features of the present invention are as follows.
[1] A grain-oriented electrical steel sheet including a forsterite coating and an insulating coating that are disposed in this order starting from a surface side of the steel sheet, wherein a frequency of formation of cracks propagating through the insulating coating in a region extending 100 um toward a widthwise middle of the grain-oriented electrical steel sheet from a widthwise edge of the grain-oriented electrical steel sheet is less than or equal to 3.0 times the frequency of formation of cracks propagating through the insulating coating in a region extending toward the widthwise middle from a widthwise position more than 100 um from the widthwise edge to a widthwise position 500 um from the widthwise edge, where the frequency is expressed as a number per mm.
[2] The grain-oriented electrical steel sheet according to [1], wherein a roughness factor of a surface is greater than or equal to 2.0.
[3] A method for manufacturing a grain-oriented electrical steel sheet, the method being designed to manufacture a slit grain-oriented electrical steel sheet, the method including manufacturing a grain-oriented electrical steel sheet that serves as a base material, by optionally hot rolling a slab for a grain-oriented electrical steel sheet; optionally subjecting a resulting steel sheet to hot band annealing; subjecting the resulting steel sheet to a single pass of cold rolling or to a plurality of passes of cold rolling with intermediate annealing being performed between passes, to achieve a final thickness of the resulting steel sheet; subjecting the resulting steel sheet to decarburization annealing; applying an annealing separator containing MgO to a surface of the resulting steel sheet and thereafter subjecting the resulting steel sheet to final annealing; and forming an insulating coating on the surface of the resulting steel sheet; and slitting the grain-oriented electrical steel sheet that serves as a base material, wherein the slitting is performed on the grain-oriented electrical steel sheet that serves as a base material, by using a picosecond pulsed laser or a femtosecond pulsed laser, or the slitting is performed on the grain-oriented electrical steel sheet in water or in a state in which a water film is present on the surface of the grain-oriented electrical steel sheet, by using a continuous laser or a pulsed laser having a pulse width of a nanosecond or more.
[4] A method for manufacturing a grain-oriented electrical steel sheet, the method being designed to manufacture a slit grain-oriented electrical steel sheet, the method including manufacturing a grain-oriented electrical steel sheet that serves as a base material, by optionally hot rolling a slab for a grain-oriented electrical steel sheet; optionally subjecting a resulting steel sheet to hot band annealing; subjecting the resulting steel sheet to a single pass of cold rolling or to a plurality of passes of cold rolling with intermediate annealing being performed between passes, to achieve a final thickness of the resulting steel sheet; subjecting the resulting steel sheet to decarburization annealing; applying an annealing separator containing MgO to a surface of the resulting steel sheet and thereafter subjecting the resulting steel sheet to final annealing; and forming an insulating coating on the surface of the resulting steel sheet; and slitting the grain-oriented electrical steel sheet that serves as a base material, wherein the insulating coating is formed by applying a coating liquid for forming the insulating coating, in a manner such that a wet film thickness of 3.0 um or greater is achieved, and by using a baking temperature of 850°C or greater, and the slitting is performed on the grain-oriented electrical steel sheet that serves as a base material, by using a pulsed laser having a beam diameter of 200 um or less and a pulse width of a nanosecond or more or by using a continuous laser having a beam diameter of 200 um or less.

### Advantageous Effects of Invention

The present invention can provide a grain-oriented electrical steel sheet having excellent coating adhesion properties and provide methods for manufacturing the same.

The present invention can limit an amount of strain that is introduced into a steel sheet by slitting and inhibit degradation of coating adhesion properties that results from slitting.

### Brief Description of Drawings

[Fig. 1] Fig. 1 is a graph showing a relationship between a pulse width of lasers used for processing and a ratio of a frequency of crack formation.
[Fig. 2] Fig. 2 is a graph showing a relationship between the ratio of the frequency of crack formation and a bend adhesion property.
[Fig. 3] Fig. 3 is a graph showing a relationship between a wet film thickness associated with the formation of an insulating coating and a roughness factor of a surface of an electrical steel sheet.
[Fig. 4] Fig. 4 is a graph showing a relationship between a baking temperature associated with the formation of the insulating coating and the roughness factor of a surface of an electrical steel sheet.
[Fig. 5] Fig. 5 is a graph showing a relationship between the roughness factor of a surface of an electrical steel sheet and the bend adhesion property regarding an instance in which processing was performed with a microsecond pulsed laser in air.
[Fig. 6] Fig. 6 is a graph showing a relationship between the roughness factor of a surface of electrical steel sheets and the bend adhesion property regarding an instance in which processing was performed with a microsecond pulsed laser in water or with a water film formed on a surface of the steel sheet.
[Fig. 7] Fig. 7 is a graph showing a relationship between a beam diameter of the laser used for the processing and the bend adhesion property.

### Description of Embodiments

Now, experiments that led to the present invention will be described.

### <Experiment 1>

A steel slab was manufactured by continuous casting. The steel slab had a chemical composition containing C: 0.05 mass%, Si: 3.7 mass%, Mn: 0.05 mass%, Ni: 0.01 mass%, Al: 300 mass-ppm, N: 100 mass-ppm, Se: 50 mass-ppm, and S: 5 mass-ppm, with the balance being Fe and incidental impurities. The steel slab was heated to 1450°C and subsequently subjected to hot rolling to form a hot rolled steel sheet having a thickness of 2.4 mm. Thereafter, the hot rolled steel sheet was subjected to hot band annealing at 1050°C for 120 seconds. Subsequently, pickling was performed with hydrochloric acid to remove subscale from the surface, and the resulting steel sheet was subjected to cold rolling to form a cold rolled steel sheet having a thickness of 0.30 mm. Subsequently, decarburization annealing was performed in which the steel sheet was held at a soaking temperature of 820°C for 120 seconds with a degree of oxidation PH₂O/PH₂ of 0.48. Subsequently, an annealing separator containing MgO as a major component was applied, and final annealing for achieving secondary recrystallization, forming a forsterite coating, and achieving purification was performed under the conditions of 1220°C and 5 hr. Thereafter, a coating liquid for forming an insulating coating was applied, and the resultant was baked to form an insulating coating. The coating liquid was made of colloidal silica and aluminum phosphate and had a concentration of 60 mass%. The baking process doubled as flattening annealing. In this manner, a grain-oriented electrical steel sheet (electrical steel sheet coil) that served as a base material was prepared. Regarding the application of the coating liquid for forming an insulating coating, the amount of application of the coating liquid (wet film thickness) was varied to prepare two types of electrical steel sheet coils (coil 1 and coil 2).

Subsequently, the electrical steel sheet coils prepared as described above were slit, and samples including a processed edge were taken from the slit coils. The samples were then subjected to stress relief annealing in a DX gas atmosphere at 800°C for 3 hours, and subsequently, a bend adhesion property of the coating (insulating coating) was evaluated. Each of the samples was wound around round bars having different diameters with increments of 5 mm. The maximum diameter at which the coating did not delaminate (bend delamination diameter) was determined as the bend adhesion property of the coating. Smaller bend delamination diameters indicate higher coating adhesion properties.

The conditions for the slitting were as follows: the slitting was performed with a typical trimming blade and also performed with a continuous wave fiber laser (continuous laser); and a line speed was 30 mpm in both cases. The slitting with a laser was carried out at a laser output of 0.8 kW and a beam diameter of the laser of 80 um with a fixed laser irradiation position. The results of evaluation of the bend adhesion property of the coating are shown in Table 1. Coil 1 had the same bend delamination diameter in the cases of the trimming blade processing and the laser processing. In contrast, coil 2 had a smaller value of the bend delamination diameter in the case of the laser processing than in the case of the processing that used a trimming blade. Its bend delamination diameter in the case of the processing that used a trimming blade was at the same level as that of coil 1 in the cases of the trimming blade processing and the laser processing.

**[Table 1]**

| No. | Coil | Processing method | Bend delamination diameter (mm) | Notes |
|---|---|---|---|---|
| 1 | 1 | Trimming blade | 60 | |
| 2 | | Laser | 60 | |
| 3 | 2 | Trimming blade | 60 | |
| 4 | | Laser | 25 | Good |

A comparison was made between the laser-processed material of coil 2 (material that was slit by the laser, No. 4 in Table 1), which exhibited particularly good results, and the other processed materials. Consequently, it was found that a frequency (number/mm) of formation of cracks propagating through the insulating coating (hereinafter also referred to simply as "cracks") in or near the slit portion (processed edge of the steel sheet) exhibited a different value. The frequency of crack formation was determined by observing, with an optical microscope, 50 sites in a region in a cross section perpendicular to the processed surface (thicknesswise cross section), the region extending 500 um toward a widthwise middle from the processed edge (a widthwise edge of the electrical steel sheet resulting from the slitting of the electrical steel sheet). Specifically, in both surfaces (top and bottom surfaces) of the electrical steel sheet, the number of cracks in a region extending 100 um toward the widthwise middle from the processed edge (the region is hereinafter also referred to as a "processed edge region") was counted, and the number of cracks in a region extending toward the widthwise middle from a widthwise position more than 100 um from the processed edge to a widthwise position 500 um from the processed edge (the region is hereinafter also referred to as a "region excluding the processed edge") was counted. The number of cracks per unit length was calculated from each of the counted numbers of cracks, and the results were designated as the frequency (number/mm) of crack formation of the processed edge region and the frequency (number/mm) of crack formation of the region excluding the processed edge. The observation of the 50 sites was carried out by observing, with an optical microscope, the cross section of randomly selected 50 sites of observation samples in which cross-sectional observation was possible. The samples were cut from the processed materials that had undergone the processing under the same conditions. For the observation, each of the samples was embedded in a resin mold to prevent changes in the state of the insulating coating. The sample was embedded in an orientation that allowed the cross section of the sample to be observed. Then, the cross section of the sample embedded in the resin mold was polished to reduce the thickness by 5 mm or more, to observe a site distant from the cut surface (a site that was not affected by the cutting). The distances from the processed edge toward the widthwise middle are distances in a horizontal direction (a direction perpendicular to a thickness direction in the cross section to be observed) from the processed edge.

The results are shown in Table 2. As shown in Table 2, the laser-processed material of coil 2 (No. 4) had a ratio of the frequency of crack formation lower than that of the other processed materials. The ratio is a ratio of the frequency of crack formation in the processed edge region to the frequency of crack formation in the region excluding the processed edge (the frequency of crack formation in the processed edge region/the frequency of crack formation in the region excluding the processed edge). The formation of cracks indicates that the coating has been destroyed as a result of a stress generated during slitting. It is considered that the destruction of the coating degraded the coating adhesion properties of the materials other than the material of No. 4. In addition, another difference observed between coil 1 and coil 2 was in a surface area of the electrical steel sheet. The surface area of the electrical steel sheet was evaluated with a parameter, namely, a roughness factor of a surface. The roughness factor of the surface of the electrical steel sheet was evaluated in the following manner. A specific surface area of a sample of the electrical steel sheet was measured with a gas adsorption method that used a Kr gas. A true surface area of the surface including microscopic irregularities was calculated from the result, and the true surface area was divided by an apparent surface area determined by assuming that the surface is completely smooth, to derive the roughness factor. Coil 2 had a higher value of the roughness factor of the surface of the electrical steel sheet than coil 1. Table 2 shows the ratio of the frequency of crack formation and the roughness factor of the surface of the electrical steel sheet. Note that since coil 1 and coil 2 had an insulating coating on a surface, the roughness factor of the surface of the electrical steel sheet is the roughness factor of the surface of the insulating coating.

**[Table 2]**

| No. | Coil | Processing method | Ratio of frequency of crack formation*¹ | Roughness factor of surface of electrical steel sheet |
|---|---|---|---|---|
| 1 | 1 | Trimming blade | 9.8 | 1.3 |
| 2 | | Laser | 6.6 | 1.3 |
| 3 | 2 | Trimming blade | 9.6 | 5.8 |
| 4 | | Laser | 2.0 | 5.8 |

| | | | | |
|---|---|---|---|---|
| *1 Frequency of crack formation in processed edge region/frequency of crack formation in region excluding processed edge | | | | |

### <Experiment 2>

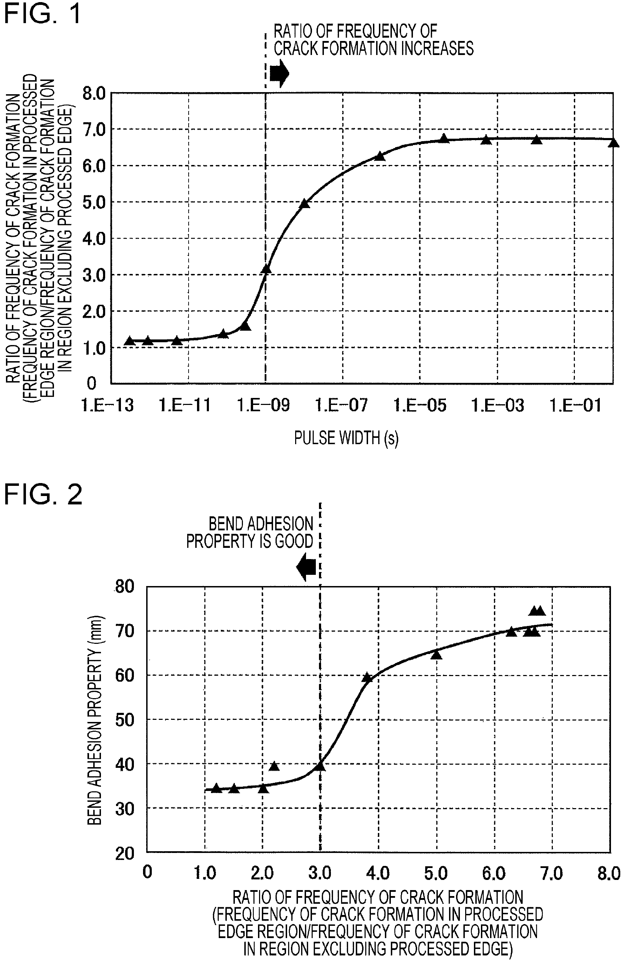

It was considered that the above-described results indicated that the frequency of crack formation in the processed edge affected the bend adhesion property of the coating. Accordingly, relationships between the frequency of crack formation and the bend adhesion property were investigated by using coil 1. In this experiment, laser-processed materials were prepared by performing slitting with lasers with varied laser pulse widths, ranging from femtosecond pulses to a continuous wave. The other conditions were the same as those of Experiment 1. Fig. 1 shows a relationship between the pulse width of the lasers used for the slitting and the ratio of the frequency of crack formation (the frequency of crack formation in the processed edge region/the frequency of crack formation in the region excluding the processed edge). It was confirmed that the ratio of the frequency of crack formation changes with changes in the pulse width of the lasers used for slitting. A reason for this is considered to be as follows. The smaller (shorter) the pulse width, the more likely it is that the processing is carried out before a heat-affected region spreads, and, therefore, the less likely it is that thermal stress, which is responsible for crack formation, is introduced into the steel sheet. When the pulse width is small, the processing is accomplished by a shock wave. A reason for this is considered to be that using a small pulse width results in an increase in an energy density, which leads to the generation of a sufficient amount of plasma for inducing a shock wave during ablation. Fig. 2 shows a relationship between the ratio of the frequency of crack formation and the bend adhesion property of the coating. The bend adhesion property of the coating was significantly improved when the ratio of the frequency of crack formation was less than or equal to 3.0, that is, when the frequency (number/mm) of formation of cracks propagating through the insulating coating in the processed edge region was less than or equal to 3.0 times the frequency (number/mm) of formation of cracks propagating through the insulating coating in the region excluding the processed edge. Furthermore, it was found that such a ratio can be achieved by performing laser irradiation (laser processing) at a pulse width of less than a nanosecond (1×10⁻⁹ seconds) (denoted as "1.E-09" in Fig. 1). Preferably, the ratio of the frequency of crack formation is less than or equal to 2.0. The lower limit of the ratio of the frequency of crack formation is not particularly restricted and may be 0.

### <Experiment 3>

The above-described experiment included a condition under which the ratio of the frequency of crack formation can be limited even in instances in which a continuous wave laser (continuous laser) is used. Studies were conducted to search for means for generating a shock wave even in instances in which a laser with a pulse width of a nanosecond or more is used. The key is whether a sufficient amount of plasma for inducing a shock wave can be generated. When a laser with a pulse width of a nanosecond or more, which has a low energy density, is used, the plasma expands and, therefore, does not generate a shock wave. A known method for inhibiting the expansion of plasma is the utilization of water. Accordingly, the present inventors conducted studies on whether it is possible to utilize water for slitting. Coil 2, which had a reduced ratio of the frequency of crack formation even in the instance in which a continuous wave laser was used, had a high roughness factor of the surface of the electrical steel sheet. This indicates that the surface of the insulating coating formed on the steel sheet had irregularities. It is considered that the greater the degree of irregularity, the more the amount of water caused to be present on the surface of the electrical steel sheet. In this experiment, a presumption was made that the amount of water present on the surface of the electrical steel sheet contributed to the generation of a shock wave, and, accordingly, an investigation was made into relationships between the roughness factor of the surface of the electrical steel sheet and the bend adhesion property.

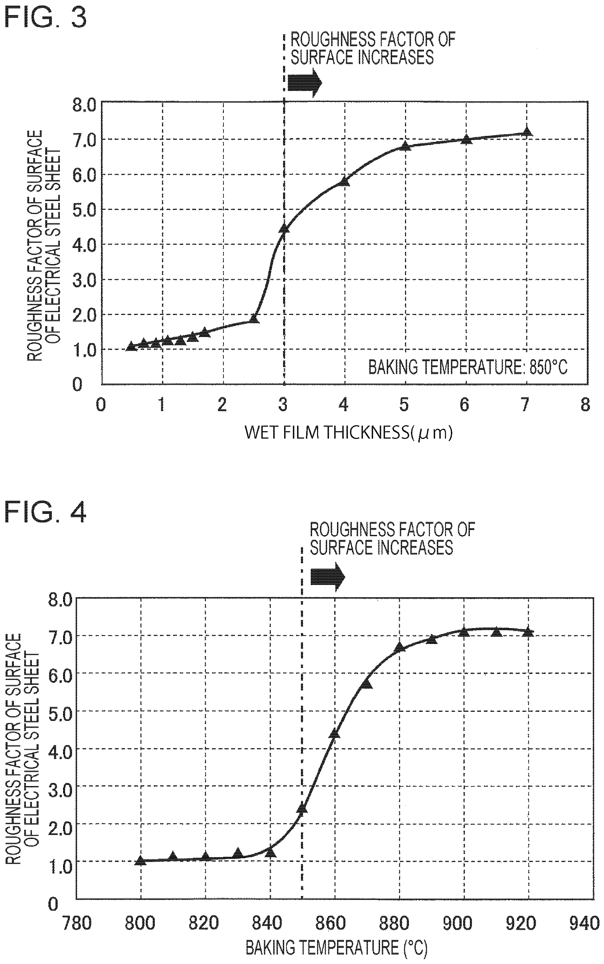

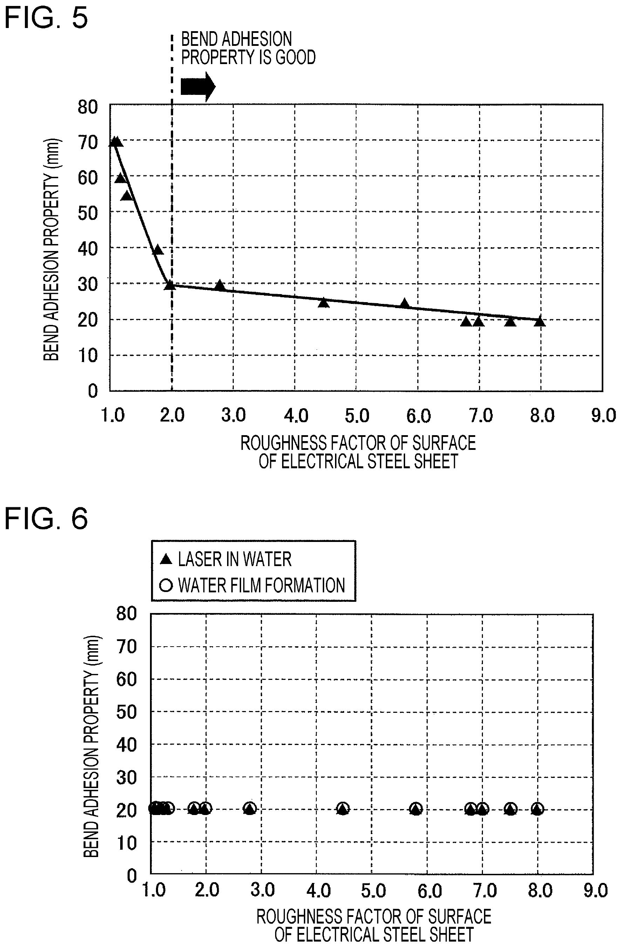

Varying the irregularities of the surface of the insulating coating was accomplished by varying the wet film thickness of the pre-baking coating liquid for forming the insulating coating and also varying the baking temperature. An electrical steel sheet coil was prepared, for which the same conditions as those of the electrical steel sheet coils prepared in Experiment 1, except for the mentioned conditions, were used. Fig. 3 shows a relationship between the roughness factor of the surface of the electrical steel sheet coil (electrical steel sheet) prepared in this experiment and the wet film thickness of the coating liquid for forming the insulating coating used for the preparation of the electrical steel sheet coil, and Fig. 4 shows a relationship between the roughness factor and the baking temperature. Figs. 3 and 4 indicate that the roughness factor of the surface of the electrical steel sheet increases in instances in which the coating liquid for forming the insulating coating used for the preparation of the electrical steel sheet coil is applied in a manner such that a wet film thickness of 3.0 um or greater is achieved, and in which the resultant is baked at 850°C or greater to form the insulating coating. Furthermore, the electrical steel sheets having different roughness factors of the surface prepared as described above were subjected to slitting that was performed with a microsecond pulsed laser, and then, the bend adhesion property of the coating in a portion including the processed edge was evaluated. The results are shown in Fig. 5. It was found that the bend adhesion property of the coating is improved when the roughness factor of the surface of the electrical steel sheet is 2.0 or greater. A reason for this is considered to be that when the degree of irregularity of the surface of the electrical steel sheet is increased, water present on the surface of the electrical steel sheet inhibits the expansion of plasma, thereby causing the generation of a shock wave and thus causing the processing principle to change from that of the processing of the related art that utilizes the thermal effect.

Since the utilization of water was confirmed to be effective, slitting with a microsecond pulsed laser was performed in water (laser in water) or under a condition in which a water film had been formed on the surface of the electrical steel sheets (water film formation); the electrical steel sheets had different roughness factors of the surface. The results are shown in Fig. 6. In these instances, the water present on the surface of the electrical steel sheet is unimportant, and, accordingly, a good bend adhesion property of the coating was exhibited regardless of the roughness factor of the surface of the electrical steel sheet.

### <Experiment 4>

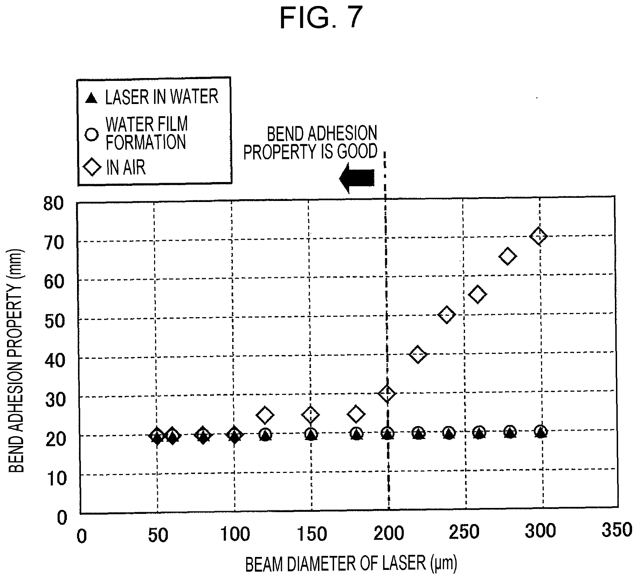

Generating a shock wave requires a high level of energy. A presumption was made that in the instance where a laser with a pulse width of a nanosecond or more (or a continuous laser) is used, the beam diameter of the laser is also an important controlling factor because the energy density is low. Accordingly, in this experiment, the beam diameter of the laser was varied. The beam diameter of the laser is a beam diameter of the laser on the surface of the workpiece, that is, the electrical steel sheet. Coil 2 was used as the processing sample. Slitting was performed under the following three conditions: laser processing in air (in air); laser processing under a condition in which a water film had been formed on the surface of coil 2 (electrical steel sheet) (water film formation); and laser processing in water (laser in water). In this experiment, the beam diameters of the laser were varied ranging from 50 to 300 um, with the other conditions being the same as the conditions of Experiment 1 employed in the case of the laser use. Fig. 7 shows a relationship between the beam diameter of the laser and the bend adhesion property of the coating. It was found that in the instance of "in air", the beam diameter needs to be 200 um or less. In the instances of "water film formation" and "laser in water", a good bend adhesion property was exhibited regardless of the beam diameter. It is considered that this is related to the amount of water that inhibits the expansion of plasma.

Now, conditions for manufacturing a grain-oriented electrical steel sheet according to the present invention will be described in detail.

Regarding the steel material (steel slab) that is used in the manufacture of the grain-oriented electrical steel sheet of the present invention, preferred basic components and optional additive components will be described in detail.

### C: 0.08 mass% or less

C is added to improve a microstructure of the hot rolled steel sheet. When C is added in an amount greater than 0.08 mass%, it becomes difficult to reduce the amount of C to 50 mass-ppm or less, which is a level that does not cause magnetic aging during the manufacturing process. Accordingly, it is preferable that a C content be less than or equal to 0.08 mass%. Note that the lower limit of the C content need not be specified because secondary recrystallization can be achieved even in a steel material that does not contain C. From the standpoint of improving the microstructure of the hot rolled steel sheet, however, it is preferable that the C content be greater than or equal to 0.01 mass%.

### Si: 2.0 to 8.0 mass%

Si is an element effective for increasing the electrical resistance of the steel, thereby reducing iron loss. When a Si content is less than 2.0 mass%, the effect of reducing iron loss may not be sufficiently produced. On the other hand, when the Si content is greater than 8.0 mass%, workability is significantly reduced, and a magnetic flux density is also reduced. Accordingly, it is preferable that the Si content be within a range of 2.0 to 8.0 mass%. More preferably, the Si content is greater than or equal to 2.5 mass%. Furthermore, more preferably, the Si content is less than or equal to 4.0 mass%.

### Mn: 0.005 to 1.0 mass%

Mn is an element necessary for improving hot workability. When a Mn content is less than 0.005 mass%, an effect of the addition is not sufficiently produced. On the other hand, when the Mn content is greater than 1.0 mass%, the magnetic flux density of the resulting product steel sheet is reduced. Accordingly, it is preferable that the Mn content be within a range of 0.005 to 1.0 mass%. More preferably, the Mn content is greater than or equal to 0.01 mass%. Furthermore, more preferably, the Mn content is less than or equal to 0.1 mass%.

In addition to the above-described basic components, a component for improving magnetic properties may be appropriately included. The component is one or more selected from the elements described below.

Ni: 0.03 to 1.50 mass%, Sn: 0.01 to 1.50 mass%, Sb: 0.005 to 1.50 mass%, Cu: 0.03 to 3.0 mass%, P: 0.03 to 0.50 mass%, Mo: 0.005 to 0.10 mass%, and Cr: 0.03 to 1.50 mass%

### Ni: 0.03 to 1.50 mass%

Ni is an element useful for improving the microstructure of the hot rolled steel sheet, thereby improving the magnetic properties. When a Ni content is less than 0.03 mass%, however, the effect of improving the magnetic properties is not significantly produced. On the other hand, when the content is greater than 1.50 mass%, secondary recrystallization may be unstable, which may degrade the magnetic properties. Accordingly, it is preferable that the Ni content be within a range of 0.03 to 1.50 mass%.

Furthermore, Sn, Sb, Cu, P, Mo, and Cr are elements useful for improving the magnetic properties. For all of these elements, when the content is less than the above-described lower limit of the component, the effect of improving the magnetic properties is not significantly produced. On the other hand, when the content is greater than the above-described upper limit of the component, the growth of the secondary recrystallization grains is impaired. Accordingly, for all of these elements, the above-described content ranges are preferable. The balance, other than the components described above, is Fe and incidental impurities, which are inevitably included during the manufacturing process.

The steel material (slab for a grain-oriented electrical steel sheet) having the above-described chemical composition is heated and subjected to hot rolling according to a common procedure. Alternatively, after the slab is cast, the slab may be, for example, directly hot rolled without being heated. In the case of a thin slab, the thin slab may be hot rolled or directly subjected to a subsequent step without being hot rolled.

Furthermore, hot band annealing is performed when necessary. Preferably, a temperature for the hot band annealing is within a range of 800 to 1100°C so as to enable the resulting product steel sheet to have a highly developed Goss texture. When the temperature for the hot band annealing is less than 800°C, a band texture resulting from the hot rolling may remain, which may make it difficult to realize a primary recrystallization texture having uniformly sized grains and consequently may impair the development of the secondary recrystallization. On the other hand, when the temperature for the hot band annealing is greater than 1100°C, the grains after the hot band annealing may be excessively coarse, which may make it extremely difficult to realize a primary recrystallization texture having uniformly sized grains.

After hot band annealing or without hot band annealing, cold rolling is performed to achieve a final thickness, and subsequently, decarburization annealing is performed. The cold rolling may be a single pass of cold rolling or a plurality of passes of cold rolling with intermediate annealing being performed between passes. Subsequently, an annealing separator containing MgO is applied to the surface of the steel sheet, and final annealing (last annealing) is performed thereon to achieve secondary recrystallization and form a forsterite coating. Subsequently, an insulating coating is formed on the surface of the steel sheet. Thus, the grain-oriented electrical steel sheet (grain-oriented electrical steel sheet coil) that serves as a base material is manufactured. Subsequently, slitting is performed on the grain-oriented electrical steel sheet that serves as a base material. Thus, a slit grain-oriented electrical steel sheet is manufactured. After the final annealing, flattening annealing for straightening may be performed, which is useful. In the present invention, flattening annealing may be performed before or after the formation of the insulating coating on the surface of the steel sheet, or the baking treatment for forming the insulating coating may double as flattening annealing. In the present invention, the "insulating coating" is an insulating coating that can impart tension to the steel sheet to reduce iron loss. Examples of the insulating coating include a tension coating containing silica and containing, as a major component, magnesium phosphate or aluminum phosphate. In the instance where the slitting is performed with a pulsed laser having a pulse width of a nanosecond or more or with a continuous laser, it is necessary to provide microscopic irregularities to the surface of the electrical steel sheet, thereby achieving a roughness factor of the surface of the electrical steel sheet of 2.0 or greater. The wet film thickness associated with the application of the coating liquid for forming an insulating coating and the baking temperature are important for controlling the roughness factor of the surface of the electrical steel sheet. This is because these factors determine surface properties of the insulating coating. An effective way to achieve the roughness factor of the surface of the electrical steel sheet of 2.0 or greater is to apply the coating liquid for forming the insulating coating, in a manner such that a wet film thickness of 3.0 um or greater is achieved, and use a baking temperature of 850°C or greater, to form the insulating coating. In this instance, the upper limit of the wet film thickness of the coating liquid for forming the insulating coating is not particularly restricted. An example of the wet film thickness of the coating liquid for forming the insulating coating is 12 um or less. Furthermore, in this instance, the upper limit of the baking temperature is not particularly restricted. An example of the baking temperature is 950°C or less.

The grain-oriented electrical steel sheet (grain-oriented electrical steel sheet coil) prepared with the above-described manufacturing method, which serves as a base material, is slit to provide a desired width in accordance with the need of a customer. Thus, a slit grain-oriented electrical steel sheet (a grain-oriented electrical steel sheet having a smaller width than the grain-oriented electrical steel sheet that serves as a base material) is formed. In the present invention, the method used for the slitting is limited to laser processing. When the slitting is performed with a typical blade, a high stress is introduced into the steel sheet during the processing, and, consequently, it becomes difficult to limit the frequency of crack formation in or near the slit portion to a value within the range of the present invention. To inhibit the introduction of stress into the steel sheet during slitting, it is important to utilize a shock wave rather than heat in the processing mechanism. In the laser processing, a preferred way to generate a shock wave is to use a picosecond pulsed laser or a femtosecond pulsed laser. In the instance where a picosecond pulsed laser or a femtosecond pulsed laser is used, the processing atmosphere is not particularly limited. In the instance where a picosecond pulsed laser or a femtosecond pulsed laser is used, it is preferable to perform the processing in air; however, this is not limiting, and the processing may be performed in a different atmosphere, such as a nitrogen gas or an inert gas. Alternatively, the processing may be performed in water or in a state in which a water film is present on the surface of the steel sheet. In the instance where the slitting is performed with a pulsed laser having a pulse width of a nanosecond or more or with a continuous laser, slitting needs to be performed in water or in a state in which a water film is present on the surface of the steel sheet. In the instance where the slitting is performed in air, an electrical steel sheet having a roughness factor of the surface of the electrical steel sheet of 2.0 or greater needs to be used, and a beam diameter of the laser of 200 um or less needs to be selected. Consequently, a shock wave can be generated even in the instance in which the slitting is performed with a pulsed laser having a pulse width of a nanosecond or more or with a continuous laser. In this instance, the upper limit of the roughness factor of the surface of the electrical steel sheet is not particularly restricted. An example of the roughness factor of the surface of the electrical steel sheet is 12.0 or less. Furthermore, in this instance, the lower limit of the beam diameter of the laser is not particularly restricted. An example of the beam diameter of the laser is 10 um or greater. Note that a "nanosecond pulsed laser" is a laser having a pulse width of 1 nanosecond or more and less than 1000 nanoseconds; the "picosecond pulsed laser" is a laser having a pulse width of 1 picosecond or more and less than 1000 picoseconds; and the "femtosecond pulsed laser" is a laser having a pulse width of 1 femtosecond or more and less than 1000 femtoseconds. The "state in which a water film is present on the surface of the electrical steel sheet that is to be slit" is a state in which the laser irradiation area (region to which laser processing is applied) of the surface of the electrical steel sheet, to which a laser beam is applied during the laser processing, is covered with a water film. The "state in which a water film is present on the surface of the electrical steel sheet" may be a state in which the surface of the electrical steel sheet is entirely covered with a water film or may be a state in which a portion of the surface of the electrical steel sheet, that is, a partial region of the surface of the electrical steel sheet including the laser irradiation area of the surface of the electrical steel sheet is covered with a water film. Furthermore, methods for forming the water film are not particularly limited, and examples of the methods include a method that uses a spray nozzle or the like to supply water to the surface of the electrical steel sheet.

The slit grain-oriented electrical steel sheet manufactured with the above-described method is one that has good coating adhesion properties at the slit edge of the electrical steel sheet (in which a reduction in coating adhesion properties during slitting is inhibited) and, therefore, can significantly reduce problems that occur due to delamination of the coating.

### EXAMPLES

### (Example 1)

A slab for a grain-oriented electrical steel sheet was manufactured by continuous casting. The slab had a chemical composition containing C: 0.04 mass%, Si: 2.9 mass%, Mn: 0.05 mass%, Ni: 0.01 mass%, Al: 50 mass-ppm, N: 30 mass-ppm, Se: 5 mass-ppm, and S: 5 mass-ppm, with the balance being Fe and incidental impurities. The slab for a grain-oriented electrical steel sheet was heated to 1300°C. Subsequently, the slab was subjected to hot rolling to form a hot rolled steel sheet having a thickness of 2.0 mm, and thereafter, the hot rolled steel sheet was subjected to hot band annealing at 1070°C for 30 seconds. Subsequently, the resulting steel sheet was pickled with hydrochloric acid to remove subscale from the surface and thereafter subjected to cold rolling to form a cold rolled steel sheet having a thickness of 0.35 mm.

Subsequently, decarburization annealing was performed in which the steel sheet was held at a soaking temperature of 810°C for 100 seconds with a degree of oxidation PH₂O/PH₂ of 0.42. Subsequently, an annealing separator containing MgO as a major component was applied, and final annealing for achieving secondary recrystallization, forming a forsterite coating, and achieving purification was performed under the conditions of 1100°C and 50 hr. Thereafter, a coating liquid for forming an insulating coating was applied in a manner such that a wet film thickness of 0.5 to 5 um was achieved, and thereafter, the resultant was baked at 900°C, to form an insulating coating. The coating liquid was made of colloidal silica and aluminum phosphate and had a concentration of 50 mass%. The baking process doubled as flattening annealing. In this manner, a grain-oriented electrical steel sheet (coil) that served as a base material was prepared.

Subsequently, the prepared coil was slit to a width of 30 mm. Thus, a slit grain-oriented electrical steel sheet having a width of 30 mm was manufactured. Thereafter, a sample for evaluating an iron loss property and a sample for evaluating the bend adhesion property were cut from the grain-oriented electrical steel sheet. The samples included the slit edge. The iron loss property was evaluated in accordance with JIS C 2550 regarding an instance in which stress relief annealing was performed at 800°C for 3 hours and an instance in which stress relief annealing was not performed. The slitting was performed at a laser output of 3.0 kW and a line speed of 100 mpm. The other process conditions are shown in Table 3. For comparison, slitting with a trimming blade was also performed. For the process, a clearance was 10% of the thickness, which is a typical condition.

**[Table 3]**

| No. | Processing atmosphere | Water film formed | Beam diameter of laser (µm) | Pulse width of laser | Roughness factor of surface of electrical steel sheet | Iron loss of base material (W/kg) | | Ratio of frequency of crack formation*¹ | Bend adhesion property (mm) | | Notes |
|---|---|---|---|---|---|---|---|---|---|---|---|
| | | | | | | Not stress relief annealed | Stress relief annealed | | Not stress relief annealed | Stress relief annealed | |
| 1 | Trimming blade | | | | 1.6 | 0.99 | 0.92 | 6.6 | 25 | 30 | Comparative Example |
| 2 | Air | No | 100 | Continuous | 1.6 | 0.99 | 0.92 | 6.1 | 25 | 30 | Comparative Example |
| 3 | Air | No | 100 | 10 µs | 1.6 | 0.99 | 0.92 | 5.5 | 25 | 30 | Comparative Example |
| 4 | Air | No | 100 | 300 ns | 1.6 | 0.97 | 0.92 | 4.2 | 25 | 30 | Comparative Example |
| 5 | Air | No | 100 | 90 ps | 1.6 | 0.92 | 0.92 | 1.3 | 5 | 10 | Example |
| 6 | Air | No | 100 | 200 fs | 1.6 | 0.92 | 0.92 | 1.5 | 5 | 10 | Example |
| 7 | Air | No | 100 | 10 µs | 3.8 | 0.92 | 0.92 | 1.6 | 5 | 10 | Example |
| 8 | Air | No | 250 | 100 ns | 3.8 | 0.96 | 0.92 | 4.8 | 25 | 30 | Comparative Example |
| 9 | Air | Yes | 250 | 10 µs | 1.6 | 0.92 | 0.92 | 2.2 | 5 | 10 | Example |
| 10 | Air | No | 250 | Continuous | 3.8 | 0.96 | 0.92 | 6.7 | 25 | 30 | Comparative Example |
| 11 | Air | Yes | 250 | Continuous | 3.8 | 0.92 | 0.92 | 1.3 | 5 | 10 | Example |
| 12 | Air | No | 50 | Continuous | 3.8 | 0.92 | 0.92 | 1.3 | 5 | 10 | Example |
| 13 | In water | - | 300 | Continuous | 1.2 | 0.92 | 0.92 | 1.3 | 5 | 10 | Example |
| 14 | In water | - | 50 | 90 ps | 1.2 | 0.92 | 0.92 | 1.3 | 5 | 10 | Example |

| | | | | | | | | | | | |
|---|---|---|---|---|---|---|---|---|---|---|---|
| *1 Frequency of crack formation in processed edge region/frequency of crack formation in region excluding processed edge | | | | | | | | | | | |

In No. 1, in which slitting with a typical trimming blade was performed, the iron losses before and after stress relief annealing significantly differed from each other. Accordingly, it is considered that the slitting caused the introduction of a high strain, which resulted in the increase in the iron loss. Furthermore, it is considered that the imparting of a high stress caused the ratio of the frequency of crack formation to fall outside the range of the present invention, which indicated that the bend adhesion property of the coating was poor. Nos. 2, 3, and 4 are examples in which slitting was carried out under the conditions of a typical laser processing method. In Nos. 2, 3, and 4, the roughness factors of the surface of the electrical steel sheets were outside the range of the condition of the present invention specified for the instance in which a laser having a pulse width of a nanosecond or more (or a continuous laser) is used; thus, the processing that took place was typical processing that used thermal energy, and as a result, a stress that had been introduced caused the ratio of the frequency of crack formation to fall outside the range of the present invention. In Nos. 8 and 10, the roughness factors of the surface of the electrical steel sheet were within the range of the condition, but the beam diameter of the laser was larger than the range of the condition, which resulted in an insufficient energy concentration. As a result, no shock wave was generated, and thus, the processing that took place was typical processing that used thermal energy; consequently, a stress that had been introduced caused the ratio of the frequency of crack formation to fall outside the range of the present invention. In the other examples, in which slitting was performed within the scope of the present invention, the iron losses before and after stress relief annealing were the same, and, therefore, the amount of strain introduced by the slitting is considered to be low. As a result, the ratio of the frequency of crack formation fell within the range of the present invention, which indicated that the bend adhesion property of the coating was good.

## Claims

1. A grain-oriented electrical steel sheet comprising a forsterite coating and an insulating coating that are disposed in this order starting from a surface side of the steel sheet, wherein
a frequency of formation of cracks propagating through the insulating coating in a region extending 100 um toward a widthwise middle of the grain-oriented electrical steel sheet from a widthwise edge of the grain-oriented electrical steel sheet is less than or equal to 3.0 times the frequency of formation of cracks propagating through the insulating coating in a region extending toward the widthwise middle from a widthwise position more than 100 um from the widthwise edge to a widthwise position 500 um from the widthwise edge, where the frequency is expressed as a number per mm.

2. The grain-oriented electrical steel sheet according to Claim 1, wherein a roughness factor of a surface is greater than or equal to 2.0.

3. A method for manufacturing a grain-oriented electrical steel sheet, the method being designed to manufacture a slit grain-oriented electrical steel sheet, the method comprising:
manufacturing a grain-oriented electrical steel sheet that serves as a base material, by
optionally hot rolling a slab for a grain-oriented electrical steel sheet;
optionally subjecting a resulting steel sheet to hot band annealing;
subjecting the resulting steel sheet to a single pass of cold rolling or to a plurality of passes of cold rolling with intermediate annealing being performed between passes, to achieve a final thickness of the resulting steel sheet;
subjecting the resulting steel sheet to decarburization annealing;
applying an annealing separator containing MgO to a surface of the resulting steel sheet and thereafter subjecting the resulting steel sheet to final annealing; and
forming an insulating coating on the surface of the resulting steel sheet; and
slitting the grain-oriented electrical steel sheet that serves as a base material, wherein
the slitting is performed on the grain-oriented electrical steel sheet that serves as a base material, by using a picosecond pulsed laser or a femtosecond pulsed laser, or the slitting is performed on the grain-oriented electrical steel sheet in water or in a state in which a water film is present on the surface of the grain-oriented electrical steel sheet, by using a continuous laser or a pulsed laser having a pulse width of a nanosecond or more.

4. A method for manufacturing a grain-oriented electrical steel sheet, the method being designed to manufacture a slit grain-oriented electrical steel sheet, the method comprising:
manufacturing a grain-oriented electrical steel sheet that serves as a base material, by
optionally hot rolling a slab for a grain-oriented electrical steel sheet;
optionally subjecting a resulting steel sheet to hot band annealing;
subjecting the resulting steel sheet to a single pass of cold rolling or to a plurality of passes of cold rolling with intermediate annealing being performed between passes, to achieve a final thickness of the resulting steel sheet;
subjecting the resulting steel sheet to decarburization annealing;
applying an annealing separator containing MgO to a surface of the resulting steel sheet and thereafter subjecting the resulting steel sheet to final annealing; and
forming an insulating coating on the surface of the resulting steel sheet; and
slitting the grain-oriented electrical steel sheet that serves as a base material, wherein
the insulating coating is formed by applying a coating liquid for forming the insulating coating, in a manner such that a wet film thickness of 3.0 um or greater is achieved, and by using a baking temperature of 850°C or greater, and
the slitting is performed on the grain-oriented electrical steel sheet that serves as a base material, by using a pulsed laser having a beam diameter of 200 um or less and a pulse width of a nanosecond or more or by using a continuous laser having a beam diameter of 200 um or less.
